# FASCICULE DE BREVET EUROPEEN

(11) **EP 4 097 880 B1**
(45) Date de publication et mention de la délivrance du brevet: **03.07.2024**
(21) Numéro de dépôt: 21701353.1
(22) Date de dépôt: 29.01.2021
(51) Int. Cl.: H04H 60/31, H04N 21/81, H04N 21/442, H04N 21/258, H04N 21/2362, H04N 21/658, H04H 60/50

(54) **PROCÉDÉS DE DIFFUSION, DE RÉCEPTION, ET D'ANALYSE D'UN FLUX DE DONNÉES DIFFUSE DANS AU MOINS UN RÉSEAU DE DIFFUSION, DISPOSITIFS ET PROGRAMME D'ORDINATEUR CORRESPONDANTS**
VERFAHREN ZUM SENDEN, EMPFANGEN UND ANALYSIEREN EINES DATENSTROMS, DER IN MINDESTENS EINEM RUNDFUNKNETZ GESENDET WIRD, SOWIE ENTSPRECHENDE VORRICHTUNGEN UND COMPUTERPROGRAMM
METHODS FOR BROADCASTING, RECEIVING AND ANALYSING A DATA STREAM BROADCAST IN AT LEAST ONE BROADCAST NETWORK, AND CORRESPONDING DEVICES AND COMPUTER PROGRAM

(30) Priorité: 31.01.2020 FR 2001007
(43) Date de publication de la demande: 07.12.2022
(73) Titulaire: Enensys Technologies, 35510 Cesson-Sévigné (FR); TDF, 92120 Montrouge (FR)
(72) Inventeur: VINCENT, David, 35150 AMANLIS (FR)
(74) Mandataire: Vidon Brevets & Stratégie
(86) Numéro de dépôt international: PCT/EP2021/052104
(87) Numéro de publication internationale: WO 2021/152088

(56) Documents cités:
- WO-A1-2017/144126
- US-A1- 2016 182 977
- US-B1- 9 204 189
- ATSC: "ATSC Standard: Application Signaling (A/337:2018)", DVB, DIGITAL VIDEO BROADCASTING, C/O EBU - 17A ANCIENNE ROUTE - CH-1218 GRAND SACONNEX, GENEVA - SWITZERLAND, 3 août 2018 (2018-08-03), XP017855629,
- ATSC: "ATSC Standard: Content Recovery in Redistribution Scenarios (A/336:2019)", , 3 octobre 2019 (2019-10-03), XP055729927, Extrait de l'Internet: URL:https://www.atsc.org/wp-content/upload s/2017/03/A336-2019-Content-Recovery-in-Re distribution-Scenarios.pdf [extrait le 2020-09-11]

## Description

### 1. Domaine de l'invention

Le domaine de l'invention est celui de la diffusion d'informations, notamment de services de télévision, dans un ou plusieurs réseaux de diffusion.

Plus précisément, l'invention propose une solution pour identifier au moins une zone de diffusion associée à un réseau de diffusion utilisé pour diffuser un flux de données. L'invention permet ainsi, notamment, de mesurer l'audience d'un programme de télévision par zone de diffusion.

L'invention s'applique notamment, mais non exclusivement, à la diffusion de flux de données selon la norme ATSC, notamment ATSC 3.0 (en anglais « Advanced Télévision Systems Committee »), DVB-T ou DVB-T2 (en anglais « Digital Video Broadcasting-Terrestrial »), DVB-S ou DVB-S2 (en anglais « Digital Video Broadcasting - Satellite »), ou encore DVB-C (en anglais « Digital Video Broadcasting - Cable »).

### 2. Art antérieur

Il existe aujourd'hui des solutions permettant de bénéficier de services interactifs avec les programmes des chaînes de télévision.

En particulier, il est possible de transmettre, dans le flux de données portant un ou plusieurs programmes, des informations liées à une ou plusieurs application(s) destinée(s) à être exécutée(s) par un récepteur, permettant notamment au récepteur de bénéficier de contenus additionnels.

Ainsi, les normes HbbTV (en anglais « Hybrid Broadcast Broadband TV ») ou ATSC 3.0, par exemple, permettent d'associer une application à un programme de télévision. Pour ce faire, un flux de données utilisé pour transporter un programme de télévision porte des informations de signalisation supplémentaires, permettant à un récepteur de reconstruire une adresse de type URL et de télécharger une application localisée à un emplacement identifié par cette URL.

L'insertion des informations de signalisation liées à une application est classiquement réalisée au niveau de la tête de réseau. Le flux est ensuite transporté et adapté en fonction du type de réseau utilisé pour la diffusion (terrestre, satellite, ...).

Les documents « Hybrid Broadcast Broadband TV », ETSI TS 102 796 V1.4.1 (2016-08), et « ATSC Standard: Signaling, Delivery, Synchronization, and Error Protection » Doc. A/331: 2019, 20 Juin 2019, décrivent notamment la signalisation à insérer dans le flux de données pour que les récepteurs puissent télécharger et exécuter une application associée à un programme de télévision.

Comme l'application est associée à un programme de télévision, elle peut être exécutée par tous les récepteurs recevant le programme de télévision quel que soit le réseau utilisé pour la diffusion du flux de données.

On note à cet effet que certains programmes de télévision peuvent être diffusés sur plusieurs réseaux de diffusion. Par exemple, un même programme peut être diffusé via un ou plusieurs réseaux de diffusion par satellite dans différents bouquets (selon la norme DVB-S2 par exemple), via un ou plusieurs réseaux de diffusion câblés (selon la norme DVB-C par exemple), et/ou via un ou plusieurs réseaux de diffusion terrestre (selon la norme DVB-T2 par exemple).

Si un programme est diffusé par plusieurs réseaux de diffusion, un opérateur de télévision peut souhaiter connaître le réseau utilisé pour la diffusion du programme vu par le téléspectateur. Pour ce faire, il peut réaliser des sondages ou s'appuyer sur des sociétés mesurant l'audience, comme Médiamétrie^{®} en France.

Un inconvénient d'une telle solution est qu'elle ne permet pas de mesurer précisément l'audience d'un programme de télévision pour un réseau de diffusion particulier. De plus, elle ne permet pas une mesure en temps réel.

Il existe donc un besoin pour une nouvelle technique permettant par exemple aux opérateurs de télévision de mesurer l'audience d'un programme de télévision, répartie par réseau utilisé pour diffuser le programme de télévision. WO 2017/144126 décrit une mesure d'audience en temps réel basé sur la table AIT qui, par auto-start, revoit des informations au serveur. Mais elle ne permet pas d'identifier de façon unique la région de broadcast.

### 3. Exposé de l'invention

L'invention propose, dans au moins un mode de réalisation, une solution ne présentant pas l'ensemble des inconvénients de l'art antérieur, sous la forme d'un procédé de diffusion d'un flux de données dans au moins un réseau de diffusion, comprenant l'insertion, dans le flux de données, d'au moins un identifiant associé à au moins une zone de diffusion du réseau de diffusion utilisé pour diffuser le flux de données.

Selon l'invention, le ou les identifiants sont transmis dans des informations de signalisation d'une application destinée à être exécutée par au moins un récepteur du flux de données.

Il est ainsi possible de transmettre, dans le flux de données, un ou plusieurs identifiants associés à une ou plusieurs zones de diffusion du flux de données. Ainsi, à réception du flux de données, un récepteur peut se connecter à une plateforme de service hébergeant l'application identifiée dans les informations de signalisation, et transmettre à la plateforme de service le ou les identifiants portés par les informations de signalisation de l'application.

La plateforme de service peut donc collecter des informations relatives à la ou aux zones de diffusion associées à une application (une même application pouvant être associée à un ou plusieurs programmes). Si l'application est associée à un unique programme de télévision, quel que soit le réseau utilisé pour diffuser le programme, il est possible de mesurer le nombre de récepteurs recevant ce programme par zone de diffusion. Ainsi, si la plateforme de service est gérée par l'opérateur de télévision, la solution proposée peut être maitrisée de bout en bout par l'opérateur de télévision.

Par exemple, un identifiant peut être associé à l'ensemble des zones de diffusion d'un réseau, i.e. au réseau de diffusion lui-même (par exemple un identifiant pour une diffusion via un satellite S1 sur tout un pays). Un identifiant peut également être associé à une zone de diffusion d'un réseau, par exemple à une plaque SFN (en anglais « Single Frequency Network »). Il est également possible de prévoir plusieurs identifiants dans les informations de signalisation d'une application, par exemple un identifiant pour le réseau de diffusion et un identifiant pour la zone de diffusion.

Ainsi, le ou les identifiants transmis dans les informations de signalisation d'une application permettent notamment de mesurer le nombre de récepteurs recevant un flux de données diffusé sur tel ou tel réseau de diffusion, et/ou dans telle ou telle zone de diffusion.

Selon au moins un mode de réalisation, la solution proposée permet ainsi de mesurer l'audience ou l'activité sur une ou plusieurs zones de diffusion (par exemple une plaque SFN), en temps réel.

On note par ailleurs que plusieurs identifiants peuvent également être transmis dans le flux de données, lorsque celui-ci transporte plusieurs programmes de télévision.

Selon un mode de réalisation particulier, lorsqu'un identifiant est associé à une zone de diffusion, la solution proposée permet de géolocaliser un récepteur à la granularité d'une zone de diffusion, en identifiant la zone de diffusion associée à la réception du flux de données par le récepteur.

Il est ainsi possible de diffuser dans la zone de diffusion identifiée, un contenu spécifique à la localisation du récepteur, comme une publicité par exemple.

On note notamment que la solution proposée ne demande pas d'information particulière du téléspectateur, puisque l'on ne cherche pas à localiser précisément le récepteur.

De plus, par rapport à l'utilisation d'une adresse IP public du récepteur pour la géolocalisation du récepteur, la solution proposée basée sur l'insertion d'un identifiant associé à une zone de diffusion permet la géolocalisation du récepteur même lorsqu'un réseau virtuel privé (en anglais « VPN ») est utilisé par le récepteur.

Selon un mode de réalisation particulier, si des informations de signalisation de l'application sont présentes dans le flux de données préalablement à l'insertion d'au moins un identifiant, alors l'insertion d'au moins un identifiant met en oeuvre une modification des informations de signalisation. Sinon, l'insertion met en oeuvre une insertion des informations de signalisation dans le flux de données.

Ainsi, l'insertion du ou des identifiants peut être mise en oeuvre au niveau de la tête de réseau ou dans un autre équipement du réseau, localisé entre la tête de réseau et les récepteurs.

En particulier, si un décrochage est mis en oeuvre dans le réseau de diffusion, en remplaçant par exemple un programme national par un programme régional dans le flux de données, il est possible d'insérer un identifiant dans les informations de signalisation d'une application associée au programme régional. Il est ainsi possible de mesurer le nombre de récepteurs ayant reçu ce programme régional.

Selon un mode de réalisation particulier, des valeurs d'identifiant(s) par défaut peuvent être prévues dans les informations de signalisation, lors de leur création. Ainsi, la structure du flux en entrée de l'inserteur et en sortie de l'inserteur n'est pas modifiée. Seule la valeur d'identifiant par défaut est remplacée par la valeur configurée dans l'inserteur.

Selon un premier mode de réalisation, ledit au moins un identifiant est transmis dans une table portant des informations relatives à l'application. Par exemple, si l'application est une application selon la norme HbbTV, ledit au moins un identifiant (ou au moins une partie de l'identifiant) peut être transmis dans le descripteur « transport_protocol descriptor » et/ou dans le descripteur « simple_application_location_descriptor » d'une table AIT (« Application Information Table ») associée à l'application.

Par exemple, un identifiant d'une zone de diffusion est transmis dans l'un des deux descripteurs, et un identifiant d'un ensemble de zones de diffusion ou du réseau de diffusion est transmis dans l'autre des deux descripteurs.

Selon un deuxième mode de réalisation, ledit au moins un identifiant est transmis dans un descripteur d'emplacement de pages d'entrée HTML. Par exemple, si l'application est une application selon le standard ATSC 3.0, ledit au moins un identifiant (ou au moins une partie de l'identifiant) est transmis dans le champ « bbandEntryPageUrl » d'une structure HELD (« HTML Entry pages Location Description ») associée à l'application.

Quel que soit le mode de réalisation, le ou les identifiant(s) peuvent être inséré(s) sous la forme d'un paramètre et/ou d'une modification du chemin d'accès à l'application.

Dans un autre mode de réalisation, l'invention concerne un dispositif de diffusion correspondant.

Un tel dispositif de diffusion, également appelé inserteur, est notamment adaptée à mettre en oeuvre le procédé de diffusion décrit ci-dessus. Il pourra bien sûr comporter les différentes caractéristiques relatives au procédé de diffusion selon l'invention, qui peuvent être combinées ou prises isolément.

Par exemple, un tel dispositif appartient au groupe comprenant :
- si l'on se place dans le contexte de la norme HbbTV :
   ∘ un multiplexeur, par exemple de type MPEG-TS,
   ∘ une passerelle de conversion de format, par exemple de type conversion ASI/IP,
   ∘ un remultiplexeur,
   ∘ un transcodeur,
   ∘ un équipement pour le décrochage (en anglais « splicer »),
   ∘ etc,
- si l'on se place dans le contexte de la norme ATSC 3.0 :
   ∘ un commutateur IP (en anglais « seamless IP switch »),
   ∘ une passerelle de diffusion (en anglais « broadgast gateway »),
   ∘ un serveur de signalisation (en anglais « signaling server »),
   ∘ etc.

L'invention concerne par ailleurs, selon au moins un mode de réalisation, un procédé de réception d'un flux de données diffusé dans au moins un réseau de diffusion, mis en oeuvre par un récepteur, comprenant la transmission, à une plateforme de service, d'une requête en téléchargement d'une application destinée à être exécutée par ledit récepteur, ladite requête étant construite à partir d'au moins un identifiant associé à au moins une zone de diffusion du réseau de diffusion utilisé pour diffuser le flux de données, et ledit au moins un identifiant étant transmis dans des informations de signalisation de l'application portées par le flux de données.

Un tel procédé de réception est notamment adapté à recevoir un flux de données diffusé selon le procédé de réception présenté précédemment. Il pourra bien sûr comporter les différentes caractéristiques relatives au procédé de diffusion selon l'invention, qui peuvent être combinées ou prises isolément.

Comme indiqué précédemment, à réception du flux de données, et notamment des informations de signalisation d'une application, le récepteur peut se connecter à une plateforme de service hébergeant l'application identifiée dans les informations de signalisation, et transmettre ainsi à la plateforme le ou les identifiants portés par les informations de signalisation de l'application.

En particulier, le récepteur construit une requête en téléchargement de l'application à partir des informations de signalisation de l'application, et notamment à partir du ou des identifiants. Une telle requête est par exemple formée à partir d'une adresse URL.

Selon un premier exemple, la requête identifie un chemin d'accès spécifique à l'application, construit à partir dudit au moins un identifiant. Par exemple, si l'application est construite selon la norme HbbTV, la requête est construite en concaténant les informations portées par le descripteur « transport_protocol_descriptor » et les informations portées par le descripteur « simple application_location descriptor », l'un et/ou l'autre de ces descripteurs portant ledit au moins un identifiant.

Selon un deuxième exemple, la requête porte au moins un paramètre obtenu à partir dudit au moins un identifiant. Par exemple, si l'application est construite selon la norme HbbTV, la requête est construite en concaténant les informations portées par le descripteur « transport_protocol_descriptor » et les informations portées par le descripteur « simple_application_location_descriptor », et en utilisant ledit au moins un identifiant comme paramètre (i.e. variable) de la requête.

En particulier, le procédé de réception met en oeuvre :
- le stockage dudit au moins un identifiant dans une mémoire du récepteur,
- lors de l'exécution de l'application par le récepteur, l'utilisation dudit au moins un identifiant dans au moins une requête de communication entre l'application et la plateforme de service.

De cette façon, le récepteur dispose de l'identifiant et peut le fournir dans toute autre requête ou nouvelle connexion avec la plateforme de service hébergeant l'application, ou avec une autre plateforme, selon un protocole de communication. Par exemple, ce protocole peut être de type http ou WebSocket.

Selon un mode de réalisation spécifique, le procédé de réception comprend également :
- l'obtention d'au moins une information associée audit récepteur,
- la transmission de ladite au moins une information associée audit récepteur à ladite plateforme de service.

Par exemple, ladite au moins une information associée audit récepteur appartient au groupe comprenant :
- un identifiant dudit récepteur,
- une liste des programmes de télévision reçus par ledit récepteur,
- un identifiant de réseau (ONID, « Original Network Identifier »),
- un identifiant du flux de données (TSID, « Transport Stream Identifier »),
- un identifiant de service (SID, « Service Identifier »),
- etc.

Il est ainsi possible de transmettre à la plateforme de service des informations associés aux récepteurs par zone/réseau de diffusion.

Dans un autre mode de réalisation, l'invention concerne un dispositif de réception correspondant.

Un tel dispositif de réception, également appelé récepteur, est notamment adaptée à mettre en oeuvre le procédé de réception décrit ci-dessus. Il pourra bien sûr comporter les différentes caractéristiques relatives au procédé de réception selon l'invention, qui peuvent être combinées ou prises isolément.

En particulier, un tel récepteur peut être intégré à une télévision, notamment une télévision dite « connectée », ou à un décodeur de type « set-top box » (box TV Internet, boîtier TNT compatible, décodeur câble connecté, etc).

Notamment, la solution proposée peut être mise en oeuvre par tout terminal compatible avec les normes ATSC 3.0 ou HbbTV. Elle ne nécessite donc pas de ressources particulières au niveau du récepteur.

L'invention concerne par ailleurs, selon au moins un mode de réalisation, un procédé d'analyse d'un flux de données diffusé dans au moins un réseau de diffusion, mis en oeuvre par une plateforme de service, comprenant :
- la réception, en provenance d'au moins un récepteur dudit flux de données, d'une requête en téléchargement d'une application destinée à être exécutée par ledit au moins un récepteur, ladite requête étant construite à partir d'au moins un identifiant associé à au moins une zone de diffusion du réseau de diffusion utilisé pour diffuser ledit flux de données, ledit au moins un identifiant étant transmis dans des informations de signalisation de ladite application portées par ledit flux de données, et
- l'extraction, à partir de ladite requête, dudit au moins un identifiant.

Il est ainsi possible de collecter, au niveau de la plateforme de service, le ou les identifiants diffusés dans un flux de données reçu par un récepteur, i.e. associés à une application destinée à être exécutée par un récepteur.

En particulier, le procédé d'analyse comprend la détermination, à partir dudit au moins un identifiant, du nombre de récepteurs recevant ledit flux de données dans la ou les zones de diffusion associée(s) audit au moins un identifiant.

De cette façon, il est possible de mesurer l'audience sur une zone de diffusion, ou sur un réseau de diffusion. L'opérateur de télévision peut ainsi adapter la diffusion des programmes en tenant compte de l'audience, ou connaître l'audience apportée par un réseau et justifier le coût de diffusion sur une zone de diffusion.

Selon un autre exemple, l'obtention du ou des identifiants permet à la plateforme de service de localiser un récepteur en fonction de l'identifiant. Il est ainsi possible de fournir au récepteur un contenu spécifique à sa localisation.

Selon un mode de réalisation particulier, le procédé d'analyse comprend également la réception d'au moins une information associée audit récepteur.

Il est ainsi possible de collecter, au niveau de la plateforme de service, des informations associés aux récepteurs par zone (ou ensembles de zones) de diffusion.

Dans un autre mode de réalisation, l'invention concerne un dispositif d'analyse correspondant.

Un tel dispositif, également appelé plateforme de service, est notamment adapté à mettre en oeuvre le procédé d'analyse précédemment. Il pourra bien sûr comporter les différentes caractéristiques relatives au procédé d'analyse selon l'invention, qui peuvent être combinées ou prises isolément.

En particulier, les procédés de diffusion, réception et analyse selon au moins un mode de réalisation de l'invention peuvent être mis en oeuvre de diverses manières, notamment sous forme matérielle et/ou sous forme logicielle.

Par exemple, au moins une étape des procédés de diffusion, réception et/ou analyse peut être mise en oeuvre :
- sur une machine de calcul reprogrammable (un ordinateur, un processeur par exemple DSP (en anglais « Digital Signal Processor »), un microcontrôleur, etc) exécutant un programme comprenant une séquence d'instructions,
- sur une machine de calcul dédiée (par exemple un ensemble de portes logiques comme un FPGA (en anglais « Field Programmable Gate Array ») ou un ASIC (en anglais « Application-Specific Integrated Circuit »), ou tout autre module matériel).

En conséquence, un mode de réalisation de l'invention vise aussi à protéger un ou plusieurs programmes d'ordinateur comportant des instructions adaptées à la mise en oeuvre des procédés de diffusion, réception et analyse tels que décrits ci-dessus lorsque ce ou ces programmes sont exécutés par un processeur, ainsi qu'au moins un support d'informations lisible par un ordinateur comportant des instructions d'au moins un programme d'ordinateur tel que mentionné ci-dessus.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
[Fig 1] la figure 1 présente un exemple de système dans lequel peut être mise en oeuvre l'invention ;
[Fig 2] la figure 2 illustre les principales étapes mises en oeuvre par les différents procédés selon un mode de réalisation de l'invention ;
[Fig 3] la figure 3 est un organigramme illustrant la configuration d'un inserteur selon un mode de réalisation de l'invention ;
[Fig 4] la figure 4 présente un exemple d'implémentation d'une plateforme de service selon un mode de réalisation de l'invention ;
[Fig 5]

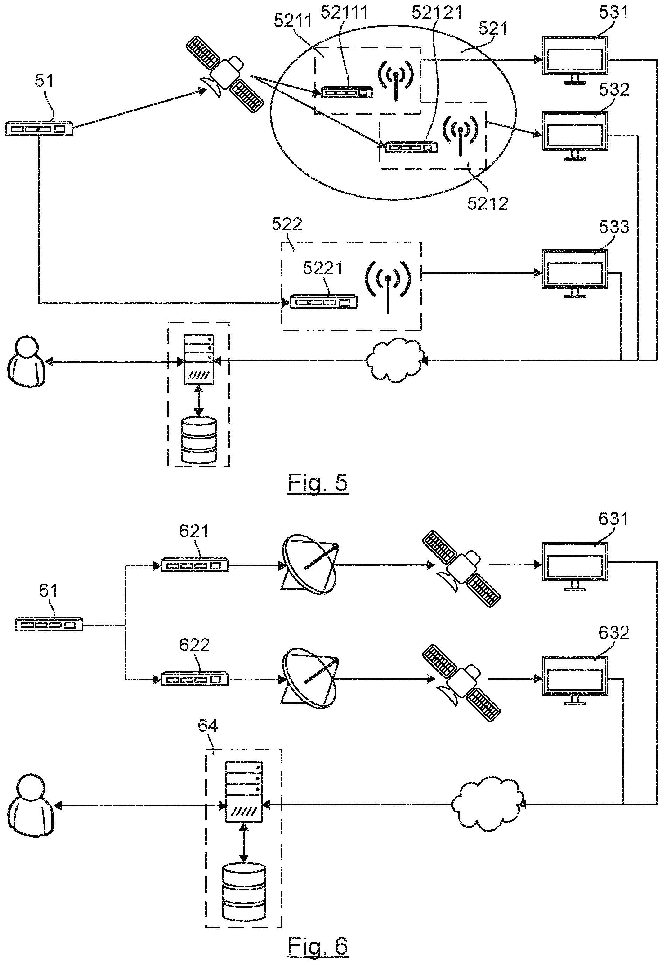

[Fig 6] les figures 5 et 6 présentent deux exemples de mise en oeuvre de l'invention pour la diffusion d'un service via plusieurs réseaux de diffusion ;
[Fig 7]
[Fig 8]

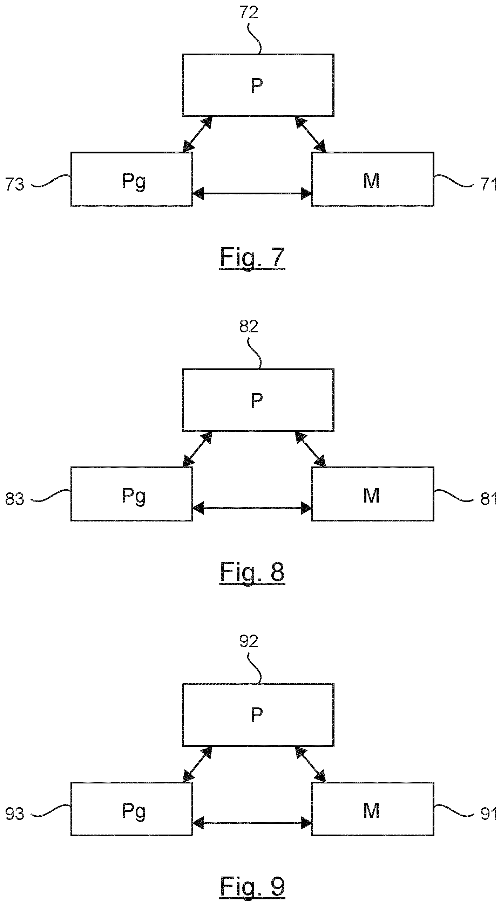

[Fig 9] les figures 7 à 9 illustrent respectivement la structure simplifiée d'un inserteur, d'un récepteur, et d'une passerelle de diffusion selon un mode de réalisation de l'invention.

### 5. Description de modes de réalisation de l'invention

### 5.1 Principe général

Le principe général de l'invention repose sur l'insertion, dans les informations de signalisation d'une application transmises dans un flux de données entre un émetteur (par exemple une tête de réseau) et au moins un récepteur (par exemple une télévision connectée), d'au moins un identifiant permettant d'identifier de façon unique au moins une zone de diffusion géographique du réseau utilisé pour diffuser le flux de données.

De cette façon, lorsque le récepteur lance une requête en téléchargement ou exécution de l'application sur une adresse obtenue à partir des informations de signalisation de l'application, une plateforme de service hébergeant l'application (ou communiquant avec un serveur hébergeant l'application) peut identifier la ou les zones de diffusion du réseau correspondant au flux de données effectivement reçu par le récepteur, et donc géolocaliser la diffusion, notamment si plusieurs zones de diffusion se recouvrent au moins partiellement.

En particulier, une telle application peut être associée à un programme transporté par le flux de données (programme de télévision ou programme de radio, par exemple). Ainsi, selon au moins un mode de réalisation, la solution proposée permet de mesurer l'audience, par zone de diffusion (ou réseau de diffusion, si l'on considère une zone de diffusion associée à un pays par exemple, ou plusieurs zones de diffusion couvrant un pays), d'un programme de télévision diffusé en utilisant des technologies de type ATSC 3.0, DVB-T, DVB-T2, DVB-S, DVB-S2 ou DVB-C, par exemple. La mesure d'audience peut se faire par zone de diffusion en utilisant des technologies de type DVB-T, DVB-T2, ou ATSC 3.0 par exemple.

Selon un autre exemple, une telle application peut adapter le contenu qu'elle restitue en tenant compte de l'identifiant de zone de diffusion (publicités ou informations adaptées à la zone de diffusion géographique, par exemple).

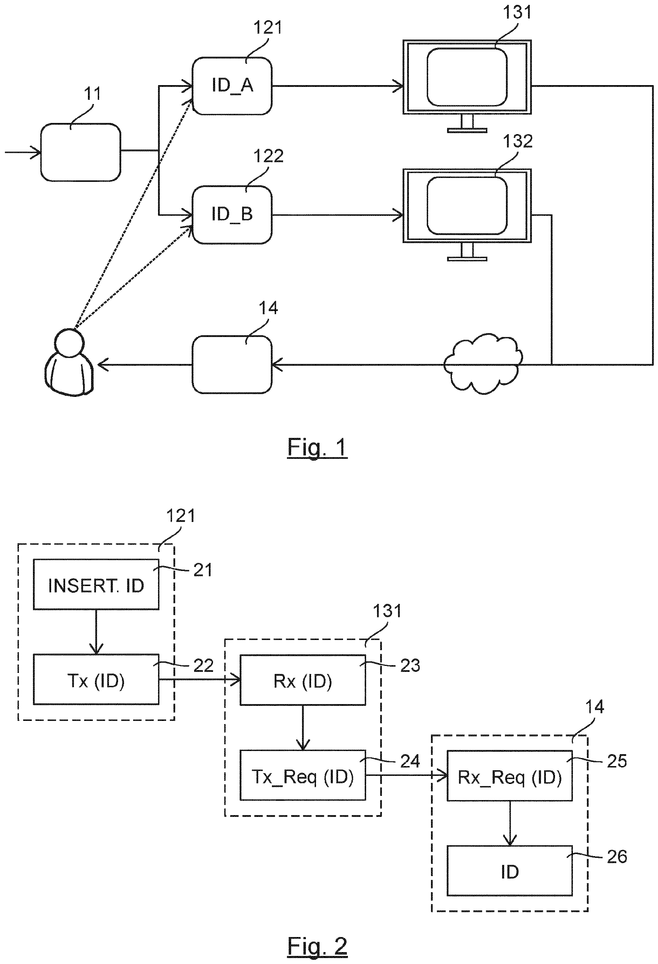

On présente en relation avec la figure 1, un exemple de système dans lequel peut être mise en oeuvre l'invention. Un tel système comprend :
- une tête de réseau 11,
- au moins un inserteur, par exemple deux inserteurs 121 et 122, permettant chacun de recevoir le signal distribué par la tête de réseau, de mettre en forme le flux de données en y insérant un identifiant distinct, et de diffuser le flux de données portant un identifiant,
- au moins un récepteur, par exemple deux récepteurs 131 et 132, permettant chacun de recevoir le flux de données portant un identifiant, et de se connecter à une application identifiée à partir du flux de données, et
- une plateforme de service 14, hébergeant l'application ou connectée à un serveur hébergeant l'application.

Le ou les inserteurs (121, 122) appartiennent chacun à une zone de diffusion distincte, et sont utilisés pour adapter les informations de signalisation à la zone de diffusion dans laquelle on souhaite mesurer la diffusion.

Si l'on se place dans le contexte de la diffusion de programme de télévision, un inserteur peut ainsi introduire ou modifier, dans le flux de données, la signalisation d'une application HbbTV ou ATSC 3.0, pour chaque zone de diffusion à mesurer.

Selon au moins un mode de réalisation de l'invention, cette signalisation permet :
- de télécharger et/ou exécuter une application sur les récepteurs compatibles et recevant le flux de données,
- d'identifier de façon unique les zones de diffusion à mesurer.

Cette identification doit être accessible par l'application et/ou par la plateforme de service, pour pouvoir mesurer le nombre de récepteurs téléchargeant et/ou exécutant l'application.

On note à cet effet que les informations de modulation ne sont pas disponibles en HbbTV ou ATSC 3.0.

Avantageusement, une instance du dispositif d'insertion est prévue par zone de diffusion que l'on souhaite pouvoir identifier. Si l'on souhaite identifier le réseau de diffusion, une instance du dispositif d'insertion peut être prévue par réseau de diffusion (satellite, câble, terrestre).

Le ou les récepteurs (131, 132) sont par exemple compatibles avec les normes HbbTV ou ATSC 3.0, et permettent de collecter des informations sur le récepteur, notamment sur le programme reçu.

Un récepteur peut ainsi obtenir, à partir des informations de signalisation portées par le flux de données diffusé, l'adresse de l'application identifiée par les informations de signalisation, par exemple une adresse URL, et effectuer une requête pour télécharger l'application HbbTV ou ATSC 3.0 référencée par l'URL. En particulier, une telle requête est construite en tenant compte de l'identifiant transmis dans les informations de signalisation de l'application. La solution proposée permet ainsi de modifier une URL présente dans le flux de données flux diffusé pour identifier une zone de diffusion géographique.

Un tel récepteur peut également exécuter l'application référencée par l'URL, ou une autre application, pour collecter des données associées au récepteur, comme un identifiant du récepteur, la liste des programmes reçus (i.e. restitués), etc.

Ces données, et en particulier l'identifiant associé à au moins une zone de diffusion, pourront être utilisées par la plateforme de service 14 pour déterminer la localisation du récepteur.

En particulier, le ou les identifiants sont conservés dans une mémoire du récepteur et accessibles par l'application exécutée sur le récepteur. Cela permet au récepteur de fournir de nouveau cette information dans toutes les requêtes ou nouvelle connexion ouverte et maintenu avec la plateforme de service. Par exemple, ces requêtes peuvent être de type http ou WebSocket.

La plateforme de service (14) est utilisée pour réaliser des mesures et éventuellement analyser des données d'audience.

Elle reçoit donc les requêtes en téléchargement en provenance des récepteurs, et éventuellement des données associées aux récepteurs.

Ainsi, selon au moins un mode de réalisation, la solution proposée permet de mesurer l'audience associée à un programme par zone de diffusion (plaque SFN par exemple) et/ou par réseau de diffusion (par satellite, par câble, etc). Elle est particulièrement pertinente pour estimer le parc éligible, i.e. le nombre de récepteurs compatibles avec des applications selon la norme HbbTV ou ATSC 3.0 par exemple, et/ou mesurer le parc adressable pour réaliser des décrochages locaux dans un réseau de diffusion.

### 5.2 Exemples de mise en oeuvre des procédés de diffusion, réception et analyse

On présente ci-après, en relation avec la figure 2, les principales étapes mises en oeuvre pour la diffusion, la réception et l'analyse d'un flux de données selon un mode de réalisation de l'invention.

Comme illustré en figure 2, un dispositif d'insertion, par exemple l'inserteur 121 ou l'inserteur 122, met en oeuvre l'insertion (21), dans le flux de données, d'au moins un identifiant associé à au moins une zone de diffusion du réseau de diffusion utilisé pour diffuser le flux de données (ID_A pour l'inserteur 121 et ID_B pour l'inserteur 122, par exemple).

Après insertion du ou des identifiants associés à au moins une zone de diffusion, le dispositif d'insertion diffuse (22) le flux de données dans le réseau de diffusion, à destination d'au moins un récepteur.

Par exemple, si le dispositif d'insertion est intégré à la tête de réseau 11, il prend en entrée les programmes à diffuser, et délivre en sortie un flux de données comprenant notamment des informations de signalisation d'une application destinée à être exécutée par au moins un récepteur du flux de données, portant le ou les identifiants de la zone ou du réseau de diffusion. Si le dispositif d'insertion est en aval de la tête de réseau (inserteur 121 par exemple), il prend en entrée un signal distribué par la tête de réseau 11, ou un flux de données avec des informations de signalisation d'une application « classiques », et délivre en sortie un flux de données modifié avec des informations de signalisation portant le ou les identifiants de la zone de diffusion, tels que configurés dans le dispositif d'insertion.

Le rôle du dispositif d'insertion est donc d'insérer, dans les flux diffusés, au moins un identifiant différent pour chaque zone de diffusion (par exemple une plaque SFN), ou chaque ensemble de zones de diffusion (par exemple toutes les zones de diffusion associées au réseau de diffusion), pour laquelle on souhaite effectuer une mesure.

Comme indiqué précédemment, le ou les identifiants sont transmis dans les informations de signalisation d'une application.

Selon un mode de réalisation particulier, une telle application étant associée à un programme de télévision, le ou les identifiants sont ajoutés dans l'URL utilisée pour télécharger l'application associée au programme de télévision.

Selon un premier exemple, une telle URL est portée par une table portant des informations relatives à ladite application, comme la table AIT selon la norme HbbTV.

Plus précisément, l'URL est portée par les descripteurs « transport_protocol_descriptor » et « simple application_location descriptor » selon la norme HbbTV. L'un et/ou l'autre de ces descripteurs peut ainsi être modifié pour y ajouter le ou les identifiants.

Selon un deuxième exemple, une telle URL est portée par un descripteur d'emplacement de pages d'entrée HTML, comme le descripteur HELD selon la norme ATSC 3.0.

Plus précisément, l'URL est portée par le champ « bbandEntryPageUrl » de la structure HELD selon la norme ATSC 3.0. Un tel champ peut ainsi être modifié pour y ajouter le ou les identifiants, sous forme de paramètre et/ou de modification du chemin d'accès.

Quel que soit le mode de réalisation considéré, le ou les identifiants peuvent être inséré(s) dans l'URL en modifiant le chemin d'accès à l'application et/ou en ajoutant un paramètre dans l'URL. Un premier identifiant peut notamment être inséré en modifiant le chemin d'accès à l'application et un deuxième identifiant sous la forme d'un paramètre.

Par exemple, si les informations de signalisation de l'application « monapp », en entrée du dispositif d'insertion, sont :
monsite.com dans le descripteur « transport_protocol descriptor » et monapp.html dans le descripteur « simple application_location descriptor »,
alors, en sortie du dispositif d'insertion, elles peuvent être :
   monsite.com/ID dans le descripteur « transport_protocol_descriptor » et monapp.html dans le descripteur « simple application_location descriptor », ou
   monsite.com/ dans le descripteur « transport_protocol_descriptor » et ID/monapp.html dans le descripteur « simple application_location descriptor », avec ID l'identifiant de la zone de diffusion (par exemple ID = ID_A pour l'inserteur 121 et ID = ID_B pour l'inserteur 122).

Selon un autre exemple, si les informations de signalisation de l'application « monapp », en entrée du dispositif d'insertion, sont :
monsite.com dans le descripteur « transport_protocol descriptor » et monapp.html dans le descripteur « simple application_location descriptor »,
alors, en sortie du dispositif d'insertion, elles peuvent être :
   monsite.com dans le descripteur « transport_protocol descriptor » et monapp.html?id=ID dans le descripteur « simple_application_location_descriptor ».

Lorsque l'identifiant est passé en paramètre, le dispositif d'insertion peut ajouter l'identifiant comme un paramètre supplémentaire ou remplacer un ou plusieurs paramètres existants. Le mode de fonctionnement peut être choisi dans la configuration du dispositif d'insertion.

Selon au moins un mode de réalisation, le dispositif d'insertion est configurable. Il prend en entrée l'identifiant à insérer, la méthode d'insertion à utiliser (par exemple modification du chemin d'accès et/ou paramètre) et l'identification du programme à modifier (i.e. des informations de signalisation de l'application associée à un programme pour lequel on souhaite mesurer l'audience par exemple). On note que cette configuration permet de modifier une signalisation existant déjà dans le flux de données.

Dans le cas de la création et de l'insertion de la signalisation, une configuration complète peut être mise en oeuvre pour créer la signalisation.

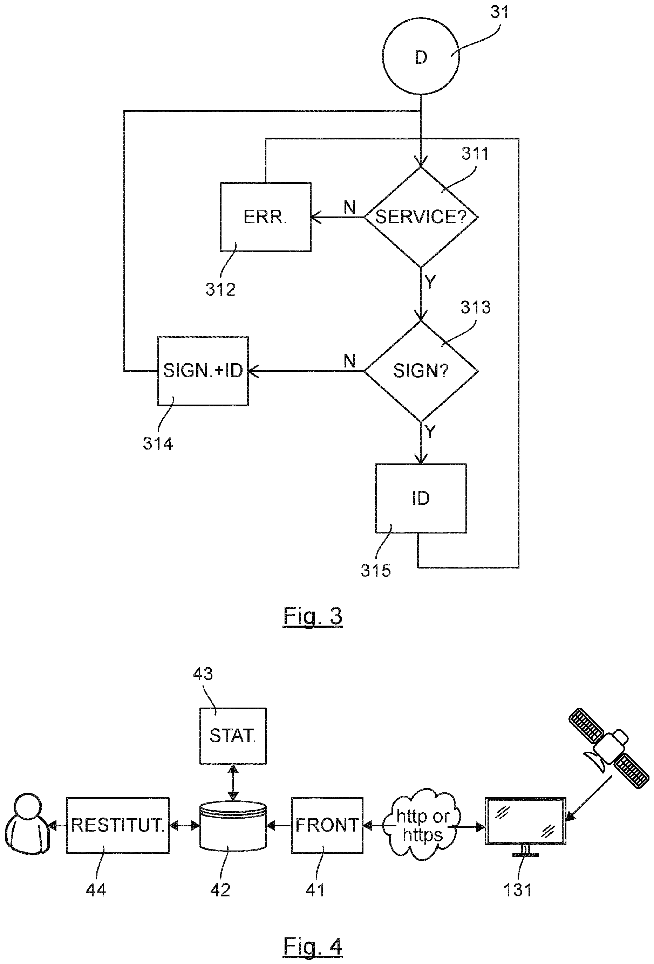

Par exemple, comme illustré en figure 3, au démarrage 31 du dispositif d'insertion, celui-ci vérifie 311 si le service est présent, i.e. s'il est possible d'identifier au moins une zone de diffusion dans le flux de données.

Si le service n'est pas présent, une erreur est notifiée (312).

Si le service est présent, le dispositif d'insertion vérifie si des informations de signalisation de l'application « classiques » sont présentes dans le flux (313).

Si les informations de signalisation « classiques » ne sont pas présentes, le dispositif d'insertion crée et insère les informations de signalisation de l'application, avec le ou les identifiants (314).

Si les informations de signalisation « classiques » sont présentes, le dispositif d'insertion modifie les informations de signalisation pour y insérer le ou les identifiants (315).

Comme indiqué précédemment, un tel dispositif d'insertion peut être intégré à une tête de réseau, ou localisé dans le réseau de diffusion, en amont des récepteurs. Il peut s'agir d'un équipement dédié dans le réseau de diffusion, ou d'un composant logiciel intégré dans un équipement existant.

En particulier, il peut être intégré à tout équipement traitant les flux de transport de type MPEG-TS / MPEG2-TS ou ATSC3.

En revenant à la figure 2, un récepteur reçoit (23) donc un flux de données, avec des informations de signalisation d'une application portant au moins un identifiant d'une zone de diffusion (par exemple le récepteur 131 pour le réseau de diffusion auquel appartient l'inserteur 121, ou le récepteur 132 pour le réseau de diffusion auquel appartient l'inserteur 122).

A partir de ces informations de signalisation, le récepteur construit une requête en téléchargement de l'application correspondante, portant le ou les identifiants, et transmet (24) cette requête à une plateforme de service, par exemple la plateforme de service 14.

Selon un mode de réalisation, la signalisation insérée permet au récepteur de télécharger une application. Le récepteur comprend donc un module permettant d'interpréter les informations de signalisation de l'application contenue dans le flux de données, par exemple une adresse URL, et de construire la requête en téléchargement, par exemple une requête http ou WebSocket, pour télécharger l'application référencée par l'URL. On note qu'un tel module d'interprétation de la signalisation est présent dans les récepteurs compatibles avec les normes HbbTV et ATSC 3.0.

Si le ou les identifiants sont insérés dans l'URL en modifiant le chemin d'accès à l'application, et si l'on se place dans le contexte de la nome HbbTV, le contenu des deux descripteurs « transport_protocol_descriptor » et « simple application_location descriptor » peut être concaténé pour former la requête http://monsite.com/ID/monapp.html. Si l'on se place dans le contexte de la norme ATSC 3.0, le contenu du champ « bbandEntryPageUrl » de la structure HELD peut être extrait pour former la requête http://monsite.com/ID/monapp.html.

Si le ou les identifiants sont insérés en ajoutant un paramètre dans l'URL et si l'on se place dans le contexte de la nome HbbTV, le contenu des deux descripteurs « transport_protocol_descriptor » et « simple application_location descriptor » peut être extrait pour former la requête http://monsite.com/monapp.html?id=ID. Si l'on se place dans le contexte de la norme ATSC 3.0, le contenu du champ « bbandEntryPageUrl » de la structure HELD peut être extrait pour former la requête http://monsite.com/monapp.html?id=ID.

On note par ailleurs que l'application référencée par l'URL peut contenir un SDK (en anglais « Software Development Kit », en français « kit de développement logiciel »), qui peut être utilisé pour collecter des données associées au récepteur et les envoyer à la plateforme de service. En variante, une autre application peut être téléchargée et lancée par le récepteur lorsqu'il restitue le programme pour collecter des données associées au récepteur et les envoyer à la plateforme de service. L'une ou l'autre de ces applications collecte par exemple au moins un élément appartenant au groupe comprenant : l'identifiant unique du récepteur, la liste des chaînes reçues par le récepteur, le triplet DVB pour chaque chaine de la liste pour les récepteurs HbbTV, etc.

On note que si le ou les identifiants sont passés en paramètre dans l'URL, l'une ou l'autre de ces applications peut également collecter ce paramètre.

Selon un mode de réalisation particulier, ces applications sont écrites en respectant les spécifications A344 de la norme ATSC 3.0 ou la norme HbbTV.

En revenant à la figure 2, la plateforme de service reçoit (25) ainsi, en provenance du récepteur 131 et/ou du récepteur 132, et éventuellement d'autres récepteurs, une requête en téléchargement d'une application destinée à être exécutée par le récepteur correspondant.

La plateforme de service peut extraire (26) le ou les identifiants portés par la ou les requêtes reçues, ainsi qu'éventuellement d'autres données en provenance des récepteurs.

Ainsi, si l'application est liée à un programme de télévision, la réception sur un récepteur du programme de télévision (i.e. sa restitution) permet d'informer la plateforme de service de la zone de diffusion et/ou du réseau de diffusion utilisé pour la diffusion du flux de données reçu par le récepteur.

La plateforme de service peut ainsi déterminer l'audience et/ou le parc de récepteurs pour chaque zone de diffusion et/ou chaque réseau de diffusion.

On décrit ci-après, en relation avec la figure 4, un exemple d'implémentation de la plateforme de service 14. Selon cet exemple, la plateforme comprend un ensemble de modules permettant la collecte des données, leur traitement et la restitution des résultats des traitements.

Ainsi, un module de front 41 reçoit les requêtes en téléchargement des applications en provenance des récepteurs, par exemple de type HTTP, HTTPS, FTP, ou autre. Il extrait le ou les identifiants de la requête (par exemple de l'URL reçue dans la requête) et les stocke dans une base de données 42.

En particulier, le module de front 41 est capable d'extraire le ou les identifiants de la requête s'il a connaissance de la configuration utilisée par le dispositif d'insertion pour insérer le ou les identifiants dans les informations de signalisation de l'application.

Par exemple, le module de front 41 connait la position et/ou la structure du ou des identifiants inséré(s) par le dispositif d'insertion dans les informations de signalisation de l'application.

Ainsi, le module de front 41 peut extraire le ou les identifiants de la requête s'ils sont passés en paramètres et/ou dans le chemin d'accès à l'application.

Les éventuelles données associées au récepteur émettant la requête en téléchargement (portées par la requête ou reçues dans un autre message) peuvent être enregistrées dans la base de données 42, en relation avec le ou les identifiants. Par exemple, ces données peuvent être l'heure de réception de la requête en téléchargement, ou comme déjà indiqué, la liste des chaînes reçues par le récepteur, un identifiant unique associé au récepteur, etc.

La base de données 42 (éventuellement plusieurs bases de données) peut stocker les données en provenance des récepteurs, ainsi qu'éventuellement les résultats de calculs statistiques.

Ainsi, selon au moins un mode de réalisation, la base de données 42 porte une table de correspondance entre les identifiants et la description de la ou des zones de diffusion associée (identification des récepteurs, liste des chaînes reçues par récepteur, etc).

Un module d'analyse statistique 43 peut également être prévu. Ce module peut utiliser les données stockées par le module de front 41 dans la base de données 42 pour calculer des statistiques par identifiant.

Le résultat des calculs peut être stocké dans la base de données 42 ou dans une base distincte pour permettre leur restitution ultérieure.

En particulier, un tel module d'analyse statistique 43 peut calculer le parc de récepteurs ou l'audience par zone de diffusion (au niveau d'une plaque SFN, d'un réseau, ...), par chaine.

On note également que les récepteurs peuvent être localisés à la zone de diffusion près. Cette localisation peut être améliorée en utilisant la liste des chaînes reçues par le récepteur. Par exemple, un récepteur recevant un service via une diffusion satellite et une diffusion terrestre pourra être localisé en utilisant la liste des chaînes reçues via la diffusion terrestre.

Enfin, un module de restitution 44 peut également être prévu pour restituer les statistiques calculées par zone de diffusion (réseau ou plaque SFN par exemple), par exemple sous forme de fichiers ou par l'intermédiaire d'un site web.

### 5.3 Exemples de systèmes diffusant un service via plusieurs réseaux de diffusion

On décrit ci-après, en relation avec les figures 5 et 6, deux exemples de mises en oeuvre de l'invention pour la diffusion d'un service via plusieurs réseaux de diffusion.

Selon l'exemple illustré en figure 5, on considère la diffusion d'un même service, par exemple un programme de télévision, via deux réseaux de diffusion terrestre de type DVB-T, T2 ou ATSC 3.0 : un réseau SFN et un réseau MFN.

On cherche selon l'invention à identifier si le service reçu par les récepteurs 531, 532, 533 a été diffusé dans le réseau SFN ou dans le réseau MFN.

Le réseau SFN comprend une plaque SFN 521, comprenant deux sites de diffusion 5211 et 5212, émettant chacun un flux de données à la même fréquence. Chaque site de diffusion reçoit un signal distribué par une tête de réseau 51, le met en forme, et diffuse un flux de données.

Par exemple, un premier inserteur 52111 est prévu dans le site de diffusion 5211, et un deuxième inserteur 52121 dans le site de diffusion 5212. De tels inserteurs mettent chacun en oeuvre les étapes d'insertion 21 et de diffusion 22 décrites en relation avec la figure 2, pour insérer un identifiant ID_A dans la signalisation d'une application associée au service dans le flux de données. L'insertion ou modification de la signalisation peut ainsi être réalisée de façon déterministe au pied de chaque émetteur des sites de diffusion 5211 et 5212. Par exemple, l'inserteur est intégré dans un équipement classiquement utilisé pour réaliser un décrochage local.

En variante, un seul inserteur est prévu pour l'ensemble des sites de diffusion d'une plaque SFN.

Selon l'exemple illustré, un identifiant unique ID_A est prévu pour les différents émetteurs d'une plaque SFN.

Le réseau MFN comprend un site de diffusion 522. Le site de diffusion 522 reçoit le signal distribué par la tête de réseau 51, le met en forme, et diffuse un flux de données. Le site de diffusion 522 comprend un inserteur 5221 mettant en oeuvre les étapes d'insertion 21 et de diffusion 22 décrites en relation avec la figure 2, pour insérer un identifiant ID_B dans la signalisation de l'application associée au service dans le flux de données. L'insertion ou modification de la signalisation peut être réalisée par une passerelle avant diffusion.

Le récepteur 531 reçoit le service en provenance du site de diffusion 5211 de la plaque SFN 521, dans un flux de données portant l'identifiant ID_A, le récepteur 532 reçoit le même service en provenance du site de diffusion 5212 de la plaque SFN 521, dans un flux de données portant l'identifiant ID_A, et le récepteur 533 reçoit le même service en provenance du site de diffusion 522 du réseau MFN, dans un flux de données portant l'identifiant ID_B.

Lorsque les récepteurs 531 à 533 reçoivent le flux de données, ils activent le service (restituent le programme de télévision par exemple) et transmettent chacun à la plateforme de service 54 une requête en téléchargement construite à partir de l'identifiant porté dans le flux de données, comme décrit en relation avec les étapes 23 et 24 de la figure 2.

La plateforme de service 54 peut extraire les identifiants portés par les requêtes en téléchargement qu'elle reçoit, comme décrit en relation avec les étapes 25 et 26 de la figure 2, et mesurer, pour chaque réseau, le nombre de récepteurs ayant reçu le service : les récepteurs 531 et 532 pour le réseau SFN identifié par l'identifiant ID_A, et le récepteur 533 pour le réseau MFN identifié par l'identifiant ID_B.

Selon l'exemple illustré en figure 6, on considère également la diffusion d'un même service, mais via deux réseaux de diffusion par satellite (même programme de télévision diffusé dans deux bouquets satellite par exemple).

On cherche selon l'invention à identifier si le service reçu par les récepteurs 631, 632 a été diffusé dans le premier réseau de diffusion par satellite ou dans le deuxième réseau de diffusion par satellite.

Le premier réseau comprend un inserteur 621 recevant un signal distribué par une tête de réseau 61 et délivrant un flux de données destiné à être diffusé par un satellite dans une zone de diffusion correspondant par exemple à un pays A. L'inserteur 621 met en oeuvre les étapes d'insertion 21 et de diffusion 22 décrites en relation avec la figure 2, pour insérer un identifiant ID_A dans la signalisation d'une application associée au service dans le flux de données.

De la même façon, le deuxième réseau satellite comprend un inserteur 622 recevant le signal distribué par la tête de réseau 61 et délivrant un flux de données destiné à être diffusé par un satellite dans une zone de diffusion correspondant par exemple à un pays B. L'inserteur 622 met en oeuvre les étapes d'insertion 21 et de diffusion 22 décrites en relation avec la figure 2, pour insérer un identifiant ID_B dans la signalisation de l'application associée au service dans le flux de données.

Par exemple, l'insertion ou modification de la signalisation peut être réalisée dans les multiplexeurs/re-multiplexeurs utilisés pour créer les différents bouquets.

Le récepteur 631 reçoit le service en provenance du premier réseau satellite, dans un flux de données portant l'identifiant ID_A, et le récepteur 632 reçoit le même service en provenance du deuxième réseau satellite, dans un flux de données portant l'identifiant ID_B.

Lorsque les récepteurs 631 et 632 reçoivent le flux de données, ils activent le service (restituent le programme de télévision par exemple) et transmettent chacun à la plateforme de service 64 une requête en téléchargement construite à partir de l'identifiant porté dans le flux de données, comme décrit en relation avec les étapes 23 et 24 de la figure 2.

La plateforme de service 64 peut extraire les identifiants portés par les requêtes en téléchargement qu'elle reçoit, comme décrit en relation avec les étapes 25 et 26 de la figure 2, et mesurer, pour chaque réseau, le nombre de récepteurs ayant reçu le service : le récepteur 631 pour le premier réseau identifié par l'identifiant ID_A, et le récepteur 632 pour le deuxième réseau identifié par l'identifiant ID_B.

### 5.4 Variantes

On a décrit ci-dessus deux exemples de mise en oeuvre de l'invention pour la diffusion d'un service par l'intermédiaire de deux réseaux de diffusion distincts. Bien entendu, l'invention peut être mise en oeuvre quel que soit le nombre de réseaux de diffusion utilisés pour la diffusion.

De même, l'invention peut être mise en oeuvre lorsqu'un unique réseau est utilisé pour la diffusion du flux, notamment lorsque le réseau met en oeuvre plusieurs émetteurs associés chacun à une zone de diffusion distincte.

Comme indiqué précédemment, il est par ailleurs possible d'insérer plusieurs identifiants dans les informations de signalisation d'une application portées par un flux de données, par exemple un identifiant associé au réseau de diffusion ou à l'opérateur du réseau de diffusion, et un identifiant associé à une zone de diffusion.

Selon un mode de réalisation particulier, il est également possible de produire toutes les versions de signalisation nécessaires en tête de réseau, de toutes les transporter et de choisir la signalisation à utiliser juste avant diffusion. Ce mode de réalisation présente par exemple un intérêt lorsqu'une fonction de re-multiplexage est prévue avant la diffusion.

Enfin, l'invention n'est pas limitée aux applications selon les normes HbbTV ou ATSC 3.0.

### 5.5 Dispositifs correspondants

On présente finalement, en relation avec les figures 7 à 9, les structures simplifiées d'un inserteur, d'un récepteur et d'une passerelle de service selon un mode de réalisation de l'invention.

Comme illustré en figure 7, un inserteur comprend une mémoire 71 (comprenant par exemple une mémoire tampon) et une unité de traitement 72 (équipée par exemple d'au moins un processeur, FPGA, ou DSP), pilotée ou pré-programmée par une application ou un programme d'ordinateur 73 mettant en oeuvre le procédé d'insertion selon un mode de réalisation de l'invention.

A l'initialisation, les instructions de code du programme d'ordinateur 73 sont par exemple chargées dans une mémoire RAM avant d'être exécutées par l'unité de traitement 72. L'unité de traitement 72 met en oeuvre les étapes du procédé d'insertion décrit précédemment, selon les instructions du programme d'ordinateur 73. Pour ce faire, selon un mode de réalisation, l'unité de traitement 72 est configurée pour insérer, dans le flux de données, au moins un identifiant associé à au moins une zone de diffusion du réseau de diffusion utilisé pour diffuser ledit flux de données, ledit au moins un identifiant étant transmis dans des informations de signalisation d'une application destinée à être exécutée par au moins un récepteur dudit flux de données.

Comme illustré en figure 8, un récepteur correspondant comprend une mémoire 81 (comprenant par exemple une mémoire tampon) et une unité de traitement 82 (équipée par exemple d'au moins un processeur, FPGA, ou DSP), pilotée ou pré-programmée par une application ou un programme d'ordinateur 83 mettant en oeuvre le procédé de réception selon un mode de réalisation de l'invention.

A l'initialisation, les instructions de code du programme d'ordinateur 83 sont par exemple chargées dans une mémoire RAM avant d'être exécutées par l'unité de traitement 82. L'unité de traitement 82 met en oeuvre les étapes du procédé de réception décrit précédemment, selon les instructions du programme d'ordinateur 83. Pour ce faire, selon un mode de réalisation, l'unité de traitement 82 est configurée pour transmettre, à une plateforme de service, une requête en téléchargement d'une application destinée à être exécutée par ledit récepteur, ladite requête étant construite à partir d'au moins un identifiant associé à au moins une zone de diffusion du réseau de diffusion utilisé pour diffuser ledit flux de données, et ledit au moins un identifiant étant transmis dans des informations de signalisation de ladite application portées par ledit flux de données.

Comme illustré en figure 9, une plateforme de service comprend une mémoire 91 (comprenant par exemple une mémoire tampon) et une unité de traitement 92 (équipée par exemple d'au moins un processeur, FPGA, ou DSP), pilotée ou pré-programmée par une application ou un programme d'ordinateur 93 mettant en oeuvre le procédé d'analyse selon un mode de réalisation de l'invention.

A l'initialisation, les instructions de code du programme d'ordinateur 93 sont par exemple chargées dans une mémoire RAM avant d'être exécutées par l'unité de traitement 92. L'unité de traitement 92 met en oeuvre les étapes du procédé d'analyse décrit précédemment, selon les instructions du programme d'ordinateur 93. Pour ce faire, selon un mode de réalisation, l'unité de traitement 92 est configurée pour :
- recevoir, en provenance d'au moins un récepteur dudit flux de données, une requête en téléchargement d'une application destinée à être exécutée par ledit récepteur, ladite requête étant construite à partir d'au moins un identifiant associé à au moins une zone de diffusion du réseau de diffusion utilisé pour diffuser ledit flux de données, ledit au moins un identifiant étant transmis dans des informations de signalisation de ladite application portées par ledit flux de données,
- extraire, à partir de ladite requête, ledit au moins un identifiant.

## Revendications

1. Procédé de diffusion d'un flux de données dans au moins un réseau de diffusion,
**caractérisé en ce qu'**il comprend l'insertion (21), dans ledit flux de données, d'au moins un identifiant permettant d'identifier de façon unique au moins une zone de diffusion du réseau de diffusion utilisé pour diffuser ledit flux de données,
ledit au moins un identifiant étant transmis (22) dans des informations de signalisation d'une application destinée à être exécutée par au moins un récepteur dudit flux de données.

2. Procédé selon la revendication 1, **caractérisé en ce que** ladite application est associée à un programme de télévision.

3. Procédé selon l'une quelconque des revendications 1 et 2, **caractérisé en ce que** si des informations de signalisation de ladite application sont présentes dans ledit flux de données préalablement à ladite insertion d'au moins un identifiant, alors ladite insertion d'au moins un identifiant met en oeuvre une modification desdites informations de signalisation, sinon, ladite insertion met en oeuvre une insertion desdites informations de signalisation dans ledit flux de données.

4. Procédé selon l'une quelconque des revendications 1 à 3, **caractérisé en ce que** ledit au moins un identifiant est transmis dans une table portant des informations relatives à ladite application.

5. Procédé selon la revendication 4, **caractérisé en ce que** ladite application est une application selon la norme HbbTV, et **en ce que** ledit au moins un identifiant est transmis dans le descripteur « transport_protocol_descriptor » et/ou dans le descripteur « simple application_location descriptor » d'une table AIT associée à ladite application.

6. Procédé selon l'une quelconque des revendications 1 à 5, **caractérisé en ce que** ledit au moins un identifiant est transmis dans un descripteur d'emplacement de pages d'entrée HTML (HELD « HTML Entry pages Location Description »).

7. Procédé selon la revendication 6, **caractérisé en ce que** ladite application est une application selon le standard ATSC 3.0, et **en ce que** ledit au moins un identifiant est transmis dans le champ « bbandEntryPageUrl » d'une structure « HTML Entry pages Location Description » associée à ladite application.

8. Procédé de réception d'un flux de données diffusé dans au moins un réseau de diffusion, mis en oeuvre par un récepteur, **caractérisé en ce qu'**il comprend :
la transmission (24), à une plateforme de service, d'une requête en téléchargement d'une application destinée à être exécutée par ledit récepteur, ladite requête étant construite à partir d'au moins un identifiant permettant d'identifier de façon unique au moins une zone de diffusion du réseau de diffusion utilisé pour diffuser ledit flux de données, et ledit au moins un identifiant étant transmis dans des informations de signalisation de ladite application portées par ledit flux de données.

9. Procédé selon la revendication 8, **caractérisé en ce que** ladite requête identifie un chemin d'accès spécifique à ladite application, construit à partir dudit au moins un identifiant.

10. Procédé selon l'une quelconque des revendications 8 et 9, **caractérisé en ce que** ladite requête porte au moins un paramètre obtenu à partir dudit au moins un identifiant.

11. Procédé selon l'une quelconque des revendications 8 à 10, **caractérisé en ce qu'**il met en oeuvre :
- le stockage dudit au moins un identifiant dans une mémoire dudit récepteur,
- lors de l'exécution de ladite application par ledit récepteur, l'utilisation dudit au moins un identifiant dans au moins une requête de communication entre ladite application et ladite plateforme de service.

12. Procédé d'analyse d'un flux de données diffusé dans au moins un réseau de diffusion, mis en oeuvre par une plateforme de service, **caractérisé en ce qu'**il comprend :
- la réception (25), en provenance d'au moins un récepteur dudit flux de données, d'une requête en téléchargement d'une application destinée à être exécutée par ledit au moins un récepteur, ladite requête étant construite à partir d'au moins un identifiant permettant d'identifier de façon unique au moins une zone de diffusion du réseau de diffusion utilisé pour diffuser ledit flux de données, ledit au moins un identifiant étant transmis dans des informations de signalisation de ladite application portées par ledit flux de données,
- l'extraction (26), à partir de ladite requête, dudit au moins un identifiant.

13. Procédé selon la revendication 12, **caractérisé en ce qu'**il comprend la détermination, à partir dudit au moins un identifiant, du nombre de récepteurs recevant ledit flux de données dans la ou les zones de diffusion identifiées par ledit au moins un identifiant.

14. Dispositif de diffusion d'un flux de données dans au moins un réseau de diffusion, également appelé inserteur,
**caractérisé en ce qu'**il comprend au moins un processeur apte à insérer, dans ledit flux de données, au moins un identifiant permettant d'identifier de façon unique au moins une zone de diffusion du réseau de diffusion utilisé pour diffuser ledit flux de données,
ledit au moins un identifiant étant transmis dans des informations de signalisation d'une application destinée à être exécutée par au moins un récepteur dudit flux de données.

15. Dispositif de réception d'un flux de données diffusé dans au moins un réseau de diffusion, également appelé récepteur,
**caractérisé en ce qu'**il comprend au moins un processeur apte à transmettre, à une plateforme de service, une requête en téléchargement d'une application destinée à être exécutée par ledit récepteur, ladite requête étant construite à partir d'au moins un identifiant permettant d'identifier de façon unique au moins une zone de diffusion du réseau de diffusion utilisé pour diffuser ledit flux de données, et ledit au moins un identifiant étant transmis dans des informations de signalisation de ladite application portées par ledit flux de données.

16. Dispositif d'analyse d'un flux de données diffusé dans au moins un réseau de diffusion, également appelé plateforme de service,
**caractérisé en ce qu'**il comprend au moins un processeur apte à :
- recevoir, en provenance d'au moins un récepteur dudit flux de données, une requête en téléchargement d'une application destinée à être exécutée par ledit récepteur, ladite requête étant construite à partir d'au moins un identifiant permettant d'identifier de façon unique au moins une zone de diffusion du réseau de diffusion utilisé pour diffuser ledit flux de données, ledit au moins un identifiant étant transmis dans des informations de signalisation de ladite application portées par ledit flux de données,
- extraire, à partir de ladite requête, ledit au moins un identifiant.

17. Programme d'ordinateur comportant des instructions pour la mise en oeuvre d'un procédé selon l'une quelconque des revendications 1 à 13 lorsque ce programme est exécuté par un processeur.

## Patentansprüche

1. Verfahren zur Versendung eines Datenstroms in mindestens einem Rundfunknetz,
**dadurch gekennzeichnet, dass** es das Einfügen (21) mindestens einer Kennung in den Datenstrom umfasst, die es ermöglicht, mindestens eine Verbreitungszone des zum Senden des Datenstroms verwendeten Rundfunknetzes eindeutig zu identifizieren,
wobei die mindestens eine Kennung in Signalisierungsinformationen einer Anwendung übertragen (22) wird, die von mindestens einem Empfänger des Datenstroms ausgeführt werden soll.

2. Verfahren nach Anspruch 1, **dadurch gekennzeichnet, dass** die Anwendung mit einem Fernsehprogramm verknüpft ist.

3. Verfahren nach einem der Ansprüche 1 und 2, **dadurch gekennzeichnet, dass**, wenn vor dem Einfügen mindestens einer Kennung Signalisierungsinformationen der Anwendung in dem Datenstrom vorhanden sind, das Einfügen mindestens einer Kennung eine Änderung der Signalisierungsinformationen bewirkt, andernfalls bewirkt das Einfügen ein Einfügen der Signalisierungsinformationen in den Datenstrom.

4. Verfahren nach einem der Ansprüche 1 bis 3, **dadurch gekennzeichnet, dass** die mindestens eine Kennung in einer Tabelle übertragen wird, die Informationen über die Anwendung enthält.

5. Verfahren nach Anspruch 4, **dadurch gekennzeichnet, dass** die Anwendung eine Anwendung gemäß dem HbbTV-Standard ist und dass die mindestens eine Kennung in dem Deskriptor "transport_protocol descriptor " und/oder in dem Deskriptor "simple_application_location_descriptor" einer mit der Anwendung verknüpften AlT-Tabelle übertragen wird.

6. Verfahren nach einem der Ansprüche 1 bis 5, **dadurch gekennzeichnet, dass** die mindestens eine Kennung in einem HTML-Eingabeseiten-Speicherort-Deskriptor (HELD "HTML Entry pages Location Description") übertragen wird.

7. Verfahren nach Anspruch 6, **dadurch gekennzeichnet, dass** die Anwendung eine Anwendung gemäß dem Standard ATSC 3.0 ist, und dass die mindestens eine Kennung in dem Feld "bbandEntryPageUrl" einer mit der Anwendung verknüpften Struktur "HTML Entry pages Location Description" übermittelt wird.

8. Verfahren zum Empfangen eines in mindestens einem Rundfunknetz ausgestrahlten Datenstroms, das von einem Empfänger ausgeführt wird, **dadurch gekennzeichnet, dass** es Folgendes umfasst:
die Übertragung (24) einer Anfrage zum Herunterladen einer Anwendung, die von dem Empfänger ausgeführt werden soll, an eine Diensteplattform, wobei die Anfrage auf der Grundlage mindestens einer Kennung erstellt wird, die es ermöglicht, mindestens eine Verbreitungszone des zum Senden des Datenstroms verwendeten Rundfunknetzes eindeutig zu identifizieren, und wobei die mindestens eine Kennung in Signalisierungsinformationen der Anwendung übertragen wird, die von dem Datenstrom getragen werden.

9. Verfahren nach Anspruch 8, **dadurch gekennzeichnet, dass** die Anfrage einen für die Anwendung spezifischen Zugangspfad identifiziert, der aus der mindestens einen Kennung aufgebaut ist.

10. Verfahren nach einem der Ansprüche 8 oder 9, **dadurch gekennzeichnet, dass** die Anfrage mindestens einen Parameter enthält, der aus der mindestens einen Kennung abgeleitet wurde.

11. Verfahren nach einem der Ansprüche 8 bis 10, **dadurch gekennzeichnet, dass** es ausführt:
- das Speichern der mindestens einen Kennung in einem Speicher des Empfängers,
- bei der Ausführung der Anwendung durch den Empfänger das Verwenden der mindestens einen Kennung in mindestens einer Kommunikationsanfrage zwischen der Anwendung und der Diensteplattform.

12. Verfahren zur Analyse eines Datenstroms, der in mindestens einem Rundfunknetz verbreitet wird, das von einer Diensteplattform ausgeführt wird, **dadurch gekennzeichnet, dass** es Folgendes umfasst:
- das Empfangen (25) einer Anfrage von mindestens einem Empfänger des Datenstroms zum Herunterladen einer Anwendung, die von dem mindestens einen Empfänger ausgeführt werden soll, wobei die Anfrage ausgehend von mindestens einer Kennung aufgebaut ist, die es ermöglicht, mindestens eine Verbreitungszone des zum Verbreiten des Datenstroms verwendeten Rundfunknetzes eindeutig zu identifizieren, wobei die mindestens eine Kennung in den Signalisierungsinformationen der Anwendung übertragen wird, die von dem Datenstrom getragen werden,
- das Extrahieren (26) der mindestens einen Kennung aus der Anfrage.

13. Verfahren nach Anspruch 12, **dadurch gekennzeichnet, dass** es die Bestimmung der Anzahl von Empfängern, die den Datenstrom in dem oder den durch die mindestens eine Kennung identifizierten Verbreitungsgebiet(en) empfangen, aus der mindestens einen Kennung umfasst.

14. Vorrichtung zur Verbreitung eines Datenstroms in mindestens einem Rundfunknetz, auch Inserter genannt,
**dadurch gekennzeichnet, dass** sie mindestens einen Prozessor umfasst, der geeignet ist, in den Datenstrom mindestens eine Kennung einzufügen, die es ermöglicht, mindestens eine Verbreitungszone des zum Verbreiten des Datenstroms verwendeten Rundfunknetzes eindeutig zu identifizieren,
wobei die mindestens eine Kennung in Signalisierungsinformationen einer Anwendung übertragen wird, die von mindestens einem Empfänger des Datenstroms ausgeführt werden soll.

15. Vorrichtung zum Empfang eines Datenstroms, der in mindestens einem Rundfunknetz verbreitet wird, auch als Empfänger bezeichnet,
**dadurch gekennzeichnet, dass** sie mindestens einen Prozessor umfasst, der dazu geeignet ist, an eine Diensteplattform eine Anfrage zum Herunterladen einer Anwendung zu übertragen, die auf dem Empfänger ausgeführt werden soll, wobei die Anfrage ausgehend von mindestens einer Kennung erstellt wird, die es ermöglicht, mindestens eine Verbreitungszone des Rundfunknetzes, das zur Verbreitung des Datenstroms verwendet wird, eindeutig zu identifizieren, und wobei die mindestens eine Kennung in den Signalisierungsinformationen der Anwendung übertragen wird, die von dem Datenstrom getragen werden.

16. Vorrichtung zur Analyse eines Datenstroms, der in mindestens einem Rundfunknetz ausgestrahlt wird, auch Diensteplattform genannt,
**dadurch gekennzeichnet, dass** sie mindestens einen Prozessor umfasst, der geeignet ist, um:
- von mindestens einem Empfänger des Datenstroms eine Anfrage zum Herunterladen einer Anwendung zu empfangen, die von dem Empfänger ausgeführt werden soll, wobei die Anfrage aus mindestens einer Kennung aufgebaut ist, die es ermöglicht, mindestens eine Verbreitungszone des zur Verbreitung des Datenstroms verwendeten Rundfunknetzes eindeutig zu identifizieren, wobei die mindestens eine Kennung in den Signalisierungsinformationen der von dem Datenstrom getragenen Anwendung übertragen wird,
- aus der Abfrage die mindestens eine Kennung zu extrahieren.

17. Computerprogramm mit Anweisungen zur Durchführung eines Verfahrens nach einem der Ansprüche 1 bis 13, wenn das Programm von einem Prozessor ausgeführt wird.

## Claims

1. A method for broadcasting a data stream in at least one broadcast network,
**characterised in that** it comprises inserting (21), into said data stream, at least one identifier allowing to uniquely identify at least one broadcast area of the broadcast network used to broadcast said data stream,
said at least one identifier being transmitted (22) in signalling information of an application intended to be executed by at least one receiver of said data stream.

2. The method according to claim 1, **characterised in that** said application is associated with a television programme.

3. The method according to any one of claims 1 and 2, **characterised in that** if signalling information of said application is present in said data stream prior to said insertion of at least one identifier, then said insertion of at least one identifier implements a modification of said signalling information, otherwise, said insertion implements an insertion of said signalling information into said data stream.

4. The method according to any one of claims 1 to 3, **characterised in that** said at least one identifier is transmitted in a table carrying information relating to said application.

5. The method according to claim 4, **characterised in that** said application is an application according to the HbbTV standard, and **in that** said at least one identifier is transmitted in the descriptor "transport_protocol_descriptor" and/or in the descriptor "simple_application_location_descriptor" of a table AIT associated with said application.

6. The method according to any one of claims 1 to 5, **characterised in that** said at least one identifier is transmitted in an HTML entry pages location descriptor (HELD "HTML Entry pages Location Description").

7. The method according to claim 6, **characterised in that** said application is an application according to the ATSC 3.0 standard, and **in that** said at least one identifier is transmitted in the "bbandEntryPageUrl" field of an "HTML Entry pages Location Description" associated with said application.

8. A method for receiving a data stream broadcast in at least one broadcast network, implemented by a receiver, **characterised in that** it comprises:
transmitting (24), to a service platform, a request to download an application intended to be executed by said receiver, said request being built from at least one identifier allowing to uniquely identify at least one broadcast area of the broadcast network used to broadcast said data stream, and said at least one identifier being transmitted in signalling information of said application carried by said data stream.

9. The method according to claim 8, **characterised in that** said request identifies an access path specific to said application, built from said at least one identifier.

10. The method according to any one of claims 8 and 9, **characterised in that** said request carries at least one parameter obtained from said at least one identifier.

11. The method according to any one of claims 8 to 10, **characterised in that** it implements:
- the storage of said at least one identifier in a memory of said receiver,
- when said application is executed by said receiver, the use of said at least one identifier in at least one communication request between said application and said service platform.

12. A method for analysing a data stream broadcast in at least one broadcast network, implemented by a service platform, **characterised in that** it comprises:
- receiving (25), from at least one receiver of said data stream, a request to download an application intended to be executed by said at least one receiver, said request being built from at least one identifier allowing to uniquely identify at least one broadcast area of the broadcast network used to broadcast said data stream, said at least one identifier being transmitted in signalling information of said application carried by said data stream,
- extracting (26), from said request, said at least one identifier.

13. The method according to claim 12, **characterised in that** it comprises determining, from said at least one identifier, the number of receivers receiving said data stream in the broadcast area(s) identified by said at least one identifier.

14. A device for broadcasting a data stream in at least one broadcast network, also called inserter,
**characterised in that** it comprises at least one processor capable of inserting, into said data stream, at least one identifier allowing to uniquely identify at least one broadcast area of the broadcast network used to broadcast said data stream,
said at least one identifier being transmitted in signalling information of an application intended to be executed by at least one receiver of said data stream.

15. A device for receiving a data stream broadcast in at least one broadcast network, also called a receiver, **characterised in that** it comprises at least one processor capable of transmitting, to a service platform, a request to download an application intended to be executed by said receiver, said request being built from at least one identifier allowing to uniquely identify at least one broadcast area of the broadcast network used to broadcast said data stream, and said at least one identifier being transmitted in signalling information of said application carried by said data stream.

16. A device for analysing a data stream broadcast in at least one broadcast network, also called a service platform,
**characterised in that** it comprises at least one processor capable of:
- receiving, from at least one receiver of said data stream, a request to download an application intended to be executed by said receiver, said request being built from at least one identifier allowing to uniquely identify at least one broadcast area of the broadcast network used to broadcast said data stream, said at least one identifier being transmitted in signalling information of said application carried by said data stream,
- extracting, from said request, said at least one identifier.

17. A computer program including instructions for implementing a method according to any one of claims 1 to 13 when this program is executed by a processor.
